# EUROPEAN PATENT APPLICATION

(11) **EP 4 557 665 A1**
(43) Date of publication of application: **21.05.2025**
(21) Application number: 23854129.6
(22) Date of filing: 30.06.2023
(51) Int. Cl.: H04L 9/40

(54) **CLOUD RESOURCE ACCESS CONTROL METHOD BASED ON CLOUD COMPUTING TECHNOLOGY, AND CLOUD MANAGEMENT PLATFORM**

(30) Priority: 15.08.2022 CN 202210972620; 07.02.2023 CN 202310076418
(71) Applicant: Huawei Cloud Computing Technologies Co., Ltd., Guiyang, Guizhou 550025 (CN)
(72) Inventor: LIN, Weibo, Guiyang, Guizhou 550025 (CN); LI, Jun, Guiyang, Guizhou 550025 (CN); LIU, Boyang, Guiyang, Guizhou 550025 (CN); LI, Shanhang, Guiyang, Guizhou 550025 (CN)
(74) Representative: MERH-IP Matias Erny Reichl Hoffmann Patentanwälte PartG mbB
(86) International application number: PCT/CN2023/104524
(87) International publication number: WO 2024/037224

(57) **Abstract**

A cloud resource access control method based on a cloud computing technology is applied to a cloud management platform. The method includes: The cloud management platform obtains and records a first resource control policy that is configured by an administrator of a target organization and that is for a target cloud resource in the target organization, where the first resource control policy indicates an access permission of a user outside the target organization for the target cloud resource; the cloud management platform obtains a first resource access request that is triggered by the user outside the target organization and that is for the target cloud resource in the target organization; and the cloud management platform allows or denies, based on the first resource control policy recorded by the cloud management platform, the first resource access request for accessing the target cloud resource. According to the cloud resource access control method based on a cloud computing technology provided in this application, a user outside an organization can be constrained from accessing a cloud resource in the organization.

## Description

This application claims priorities to Chinese Patent Application No. 202210972620.6, filed on August 15, 2022 and entitled "ACCESS CONTROL METHOD BASED ON ORGANIZATION RESOURCE AND APPARATUS", and to Chinese Patent Application No. 202310076418.X, filed on February 7, 2023 and entitled "CLOUD RESOURCE ACCESS CONTROL METHOD BASED ON CLOUD COMPUTING TECHNOLOGY AND CLOUD MANAGEMENT PLATFORM", both of which are incorporated herein by reference in their entireties.

### TECHNICAL FIELD

This application relates to the field of computer technologies, and in particular, to a cloud resource access control method based on a cloud computing technology, and a cloud management platform.

### BACKGROUND

To meet requirements of enterprise customers for unified management and control of identities and resources, an IT system needs to provide organization management services. The organization management service mainly provides three capabilities for customers.

Separation of duty unit (separation of duty unit, SoD unit): The separation of duty unit is a smallest unit that is configured to configure different operation permissions and carry different cloud resources to meet a principle of separation of responsibilities and permissions between various business departments and business operators of an enterprise. For different cloud vendors, the SoD unit has different names. For example, the SoD unit may be referred to as an account (account), a subscription (subscription), or a project (project).

Hierarchical management: An enterprise generally has a top-down tree organization structure, and a capability of the hierarchical management is to organize SoD units in a tree structure, to facilitate management by operators of various departments of the enterprise.

Organization compliance control policy: An enterprise needs to have a unified compliance control capability for operators and resources applied for on a cloud, for example, controlling an access boundary of cloud data. The organization compliance control policy is a type of mandatory access control (mandatory access control, MAC) policy that is applied to an overall organization or some organization units. It should be noted that, different from discretionary access control (discretionary access control, DAC), mandatory access control is not an authorization, but a constraint. An object to which the mandatory access control policy is applied does not have a permission beyond a scope of the policy.

However, an organization compliance control policy provided by an existing organization management service can constrain only an identity in an account, but cannot constrain a resource in the account.

### SUMMARY

Embodiments of this application provide a cloud resource access control method based on a cloud computing technology. A resource control policy is directly applied to a resource in an organization, and constrains access to the resource in the organization, so that a user outside the organization can be constrained from accessing the cloud resource in the organization.

According to a first aspect, this application provides a cloud resource access control method based on a cloud computing technology. The method is applied to a cloud management platform, the cloud management platform is configured to manage an infrastructure that provides a plurality of cloud resources, the infrastructure includes at least one cloud data center, a plurality of servers are disposed in each cloud data center, one or any combination of the plurality of cloud resources is deployed in at least one server of the infrastructure, and the plurality of cloud resources are set in at least one organization. The method includes: The cloud management platform obtains and records a first resource control policy that is configured by an administrator of a target organization and that is for a target cloud resource in the target organization, where the first resource control policy indicates an access permission of a user outside the target organization for the target cloud resource; the cloud management platform obtains a first resource access request that is triggered by the user outside the target organization and that is for the target cloud resource in the target organization; and the cloud management platform allows or denies, based on the first resource control policy recorded by the cloud management platform, the first resource access request for accessing the target cloud resource.

According to the cloud resource access control method based on a cloud computing technology provided in this application, a resource control policy is directly applied to a cloud resource in an organization, and constrains access to the cloud resource in the organization, so that an administrator of the organization performs unified access control management on the cloud resource in the organization, and a user outside the organization can be constrained from accessing the cloud resource in the organization. For example, in a multi-account environment of an organization, when a resource is frequently shared across accounts, the resource in the organization is controlled not to be illegally accessed by the user outside the organization.

For example, the first resource control policy includes a first constraint condition, where the first constraint condition is used to constrain a case in which an access user belongs to the target organization. When the first resource access request is triggered by a user outside the target organization, that is, when the access user does not meet the first constraint condition, the first resource access request for accessing the target cloud resource is denied.

In a possible implementation, the cloud resource access control method based on a cloud computing technology provided in this application further includes: The cloud management platform obtains and records a second resource control policy that is configured by the administrator of the target organization and that is for the target cloud resource in the target organization, where the second resource control policy indicates an access permission of a user in the target organization for the target cloud resource; the cloud management platform obtains a second resource access request that is triggered by the user in the target organization and that is for the target cloud resource in the target organization; and the cloud management platform allows or denies, based on the second resource control policy recorded by the cloud management platform, the second resource access request for accessing the target cloud resource.

In this possible implementation, access of a user in the organization to the cloud resource in the organization is controlled through the second resource control policy. For example, a case in which users in different departments can access only cloud resources in the departments to which the users belong is constrained, to implement more refined resource management.

For example, the second resource control policy includes a second constraint condition, where the second constraint condition is used to constrain a case in which an access user belongs to a target organization node. When the second resource access request is triggered by a user in the target organization, but the user does not belong to the target organization node, that is, when the access user does not meet the second constraint condition, the second resource access request for accessing the target resource is denied.

In another possible implementation, before the cloud management platform obtains and records the first resource control policy that is configured by the administrator of the target organization and that is for the target cloud resource in the target organization, the cloud resource access control method based on a cloud computing technology provided in this application further includes: The cloud management platform obtains a plurality of registration requests that carry different user accounts; the cloud management platform respectively registers and records a plurality of user accounts based on the plurality of registration requests, where the plurality of user accounts include an account of the administrator; and the cloud management platform classifies the plurality of user accounts into the target organization, and sets the account of the administrator as an administrator account of the target organization.

In other words, before a cloud service is used, registration needs to be performed on the cloud management platform, and a plurality of accounts may be registered. The accounts are managed in an organization form, and each account corresponds to a corresponding cloud resource. For example, an organization is an enterprise organization, members in an enterprise respectively register different accounts, and the members whose levels are different or departments are different may use different cloud resources in the enterprise organization.

In another possible implementation, the first resource access request carries a user account registered by the user outside the target organization on the cloud management platform, and that the cloud management platform obtains the resource access request that is triggered by the user outside the target organization and that is for the target cloud resource in the target organization includes: When determining that the user account carried in the first resource access request does not belong to the plurality of user accounts corresponding to the target organization, the cloud management platform determines that the first resource access request is triggered by the user outside the target organization.

In other words, an access request is from another user on a cloud, and the user has performed registration on the cloud but is not in the target organization. The cloud management platform determines that the access request sent by the user is triggered by the user outside the target organization.

In another possible implementation, the first resource access request does not carry a user account registered on the cloud management platform, and that the cloud management platform obtains the resource access request that is triggered by the user outside the target organization and that is for the target cloud resource in the target organization includes: When determining that the first resource access request does not carry the user account registered on the cloud management platform, the cloud management platform determines that the first resource access request is triggered by the user outside the target organization.

In this possible implementation, an access request is from another user off the cloud, and the user does not perform registration on the cloud (that is, the user has no account). The cloud management platform determines that the access request sent by the user is triggered by the user outside the target organization.

For example, a target cloud resource corresponding to the access request is a virtual machine. A web page is provided on the cloud for use by a public network, and a terminal (for example, a mobile phone or a personal computer) off the cloud may access a public network IP (a target public network IP) of the web page by using a source public network IP of the terminal.

In a possible implementation, the cloud resource access control method based on a cloud computing technology provided in this application further includes: The cloud management platform obtains a third resource control policy, and obtains context information of a third resource access request, where the context information includes IP network segment information, and the IP network segment information indicates an IP network segment in which a transmit end of the resource access request is located; the third resource control policy further includes a third constraint condition, where the third constraint condition is used to constrain a case in which a source public network IP network segment corresponding to the resource access request belongs to a preset IP network segment; and when the source public network IP network segment belongs to the preset IP network segment, the user is allowed to access the target cloud resource. In other words, according to the cloud resource access control method based on a cloud computing technology provided in this application, a user (including a user on a cloud or a user off the cloud) of a specific source public network segment may be forbidden from accessing the target cloud resource or allowed to access the target cloud resource.

In this possible implementation, a resource control policy includes a plurality of constraint conditions, and authentication on a resource access request succeeds only when resource access request information meets all the constraint conditions. This provides more refined resource access control. For example, context information of the resource access request information is obtained, where the context information includes a public network IP network segment corresponding to the resource access request, and the plurality of constraint conditions in the resource control policy include that an IP network segment in which a transmit end of the resource access request is located belongs to a preset network segment (for example, a public network segment in which the target organization is located). Authentication on only an access request sent from the preset network segment succeeds, and the target resource is allowed to be accessed.

In another possible implementation, the resource access request information further includes operation information, where the operation information indicates an operation performed on the target resource; the resource control policy further includes a fourth constraint condition, where the fourth constraint condition is used to constrain a case in which the operation indicated by the operation information belongs to a preset operation; and an authentication result of the resource access request is further related to the operation information and the third constraint condition.

The resource access request information further carries the operation information. The plurality of constraint conditions in the resource control policy include that the operation indicated by the operation information belongs to the preset operation. For example, the preset operation is a read operation, that is, only the read operation is allowed to be performed on the target resource.

In another possible implementation, target resource information includes a resource identifier, and the resource identifier uniquely identifies a target resource. The determining a resource control policy corresponding to the target resource information includes: querying a preset index table based on the resource identifier, to obtain the resource control policy corresponding to the target resource information, where a plurality of index terms in the index table are determined based on a plurality of resource identifiers, and the plurality of resource identifiers are a plurality of resource identifiers corresponding to a plurality of resources in the target organization or an organization node to which the target resource belongs.

In this possible implementation, the resource identifier is used as an index of the resource control policy, so that an authentication system can quickly perform indexing and obtain a freedom control policy that is applied to the target resource, to perform policy calculation.

In another possible implementation, the determining a resource control policy corresponding to the target resource information includes: determining, based on the target resource information, an organization member to which a target resource belongs; querying a mapping table to obtain a resource control policy associated with the target organization and/or an organization node in which the organization member is located, where the mapping table records a mapping relationship between each organization node and/or organization and each resource control policy; and determining the resource control policy corresponding to the target resource information based on the resource control policy associated with the target organization and/or the organization node in which the organization member is located.

In other words, another manner of quickly finding the resource control policy corresponding to the target resource information is provided. An organization member to which a target resource belongs is determined, an organization node in which the organization member is located and/or an organization in which the organization member is located is determined, and then a resource control policy that is applied to the organization and/or the organization node is determined. The resource control policy is the resource control policy corresponding to the target resource.

In another possible implementation, the resource access request is used to invoke an application programming interface API to access a target resource in a target cloud service; and if an authentication result is that authentication succeeds, the resource access request is responded to, and a result of accessing the target resource based on the access request is returned to an access user. For example, if the resource access request is to perform a read operation on the target resource, the result of accessing is read target resource data.

In another possible implementation, the first resource control policy includes a cloud resource identifier field, an effect field, a request type field, and a condition field, where the cloud resource identifier field identifies the target cloud resource, the effect field identifies that access to the target cloud resource is denied or allowed, the request type field identifies a request type of the first resource access request, and the condition field indicates a user outside the target organization.

Optionally, a type of the cloud resource includes a virtual machine and a container for a computing service, a bucket for an object storage service, an EVS disk, and a cloud database.

According to a second aspect, this application provides a cloud management platform. The cloud management platform is configured to manage an infrastructure that provides a plurality of cloud resources, the infrastructure includes at least one cloud data center, a plurality of servers are disposed in each cloud data center, one or any combination of the plurality of cloud resources is deployed in at least one server of the infrastructure, and the plurality of cloud resources are set in at least one organization. The cloud management platform includes: an organization management module, a service module, and an authentication module. The organization management module is configured to obtain and record a first resource control policy that is configured by an administrator of a target organization and that is for a target cloud resource in the target organization, where the first resource control policy indicates an access permission of a user outside the target organization for the target cloud resource; the service module is configured to obtain a first resource access request that is triggered by the user outside the target organization and that is for the target cloud resource in the target organization; the authentication module is configured to determine a first authentication result based on the first resource control policy recorded by the organization management module, where the first authentication result is allowing or denying the first resource access request for accessing the target cloud resource; and the service module is further configured to obtain the first authentication result from the authentication module, and allow or deny, based on the first authentication result, the first resource access request for accessing the target cloud resource.

In a possible implementation, the organization management module is further configured to obtain and record a second resource control policy that is configured by the administrator of the target organization and that is for the target cloud resource in the target organization, where the second resource control policy indicates an access permission of a user in the target organization for the target cloud resource; the service module is further configured to obtain a second resource access request that is triggered by the user in the target organization and that is for the target cloud resource in the target organization; the authentication module is configured to determine a second authentication result based on the second resource control policy recorded by the organization management module, where the second authentication result is allowing or denying the second resource access request for accessing the target cloud resource; and the service module is further configured to obtain the second authentication result from the authentication module, and allow or deny, based on the second authentication result, the second resource access request for accessing the target cloud resource.

In another possible implementation, the cloud management platform further includes a registration module. The registration module is configured to obtain a plurality of registration requests that carry different user accounts, and respectively register and record a plurality of user accounts based on the plurality of registration requests, where the plurality of user accounts include an account of the administrator; and the organization management module is configured to classify the plurality of user accounts into the target organization, and set the account of the administrator as an administrator account of the target organization.

In another possible implementation, the first resource access request carries a user account registered by the user outside the target organization on the cloud management platform; and the service module is configured to: when determining that the user account carried in the first resource access request does not belong to the plurality of user accounts that correspond to the target organization and that are recorded by the registration module, determine that the first resource access request is triggered by the user outside the target organization.

In another possible implementation, the first resource access request does not carry a user account registered on the cloud management platform, and the service module is configured to: when determining that the first resource access request does not carry the user account registered on the cloud management platform, determine that the first resource access request is triggered by the user outside the target organization.

In another possible implementation, the first resource control policy includes a cloud resource identifier field, an effect field, a request type field, and a condition field, where the cloud resource identifier field identifies the target cloud resource, the effect field identifies that access to the target cloud resource is denied or allowed, the request type field identifies a request type of the first resource access request, and the condition field indicates a user outside the target organization.

In another possible implementation, a type of the cloud resource includes a virtual machine and a container for a computing service, a bucket for an object storage service, an EVS disk, and a cloud database.

According to a third aspect, this application provides a server, including a storage and a processor, where the storage stores executable code, and the processor executes the executable code to implement the method provided in the first aspect of this application.

According to a fourth aspect, this application provides a computing device, including a storage and a processor, where the storage stores executable code, and the processor executes the executable code to implement the method provided in the first aspect of this application.

According to a fifth aspect, this application provides a computer-readable storage medium, storing a computer program, where when the computer program is executed in a computer, the computer is enabled to perform the method provided in the first aspect of this application.

According to a sixth aspect, this application provides a computer program or a computer program product, where the computer program or the computer program product includes instructions, and when the instructions are executed, the method provided in the first aspect of this application is implemented.

According to a seventh aspect, an embodiment of this application further provides a chip, including at least one processor and a communication interface, where the processor is configured to perform the method according to the first aspect of this application.

### BRIEF DESCRIPTION OF DRAWINGS

FIG. 1 to FIG. 3 are respectively diagrams of organization management service models in a related technology;
FIG. 4 is a diagram of an SCP of denying access to an s3:GetObject API;
FIG. 5 is a diagram after an SCP is bound to a root node of an organization;
FIG. 6 is a scenario diagram after account sharing is performed after an SCP is bound to a root node of an organization;
FIG. 7 is a diagram of an architecture of a system to which a cloud resource access control method based on a cloud computing technology according to an embodiment of this application may be applied;
FIG. 8 is a schematic flowchart of a cloud resource access control method based on a cloud computing technology according to an embodiment of this application;
FIG. 9 is a diagram in which an RCP is directly applied to a cloud resource in a target organization after the RCP is bound to a root node of the target organization;
FIG. 10 is a schematic flowchart of another cloud resource access control method based on a cloud computing technology according to an embodiment of this application;
FIG. 11 is a diagram of an implementation process of a resource access control method in a specific application scenario according to an embodiment of this application;
FIG. 12 is a diagram of a structure of a cloud control platform according to an embodiment of this application;
FIG. 13 is a diagram of a structure of a computing device according to an embodiment of this application;
FIG. 14 is a diagram of a computing device cluster according to an embodiment of this application; and
FIG. 15 is a diagram of an application scenario of the computing device cluster provided in FIG. 14.

### DESCRIPTION OF EMBODIMENTS

The following clearly describes technical solutions in embodiments of this application with reference to accompanying drawings. It is clear that the described embodiments are merely some but not all embodiments of this application. All other embodiments obtained by a person of ordinary skill in the art based on embodiments of this application without creative efforts shall fall within the protection scope of this application.

"Embodiments" mentioned herein mean that specific features, structures, or characteristics described in combination with embodiments may be included in at least one embodiment of this application. The phrase appearing at various locations in this specification does not necessarily refer to a same embodiment, and is not an independent or alternative embodiment mutually exclusive to another embodiment. It is explicitly and implicitly understood by a person skilled in the art that embodiments described in the specification may be combined with another embodiment.

Cloud technology (cloud technology): The cloud technology is a hosting service that integrates a series of resources such as hardware, software, and a network in a wide area network or a local area network to implement data calculation, storage, processing, and sharing.

Public cloud (public cloud): The public cloud is a cloud that is provided by a third-party provider for a user and that can be used by the user. The public cloud may be generally used over a network, and may be free or at a low cost. This type of cloud has many instances, which can provide services across an open public network.

Private cloud (private cloud): A cloud infrastructure and software and hardware resources are created in a firewall, so that a mechanism or each department of an enterprise shares resources in a data center. The private cloud is a cloud infrastructure that operates for a specific organization. A manager may be the organization or a third party. The manager may be located inside the organization or outside the organization.

Hybrid cloud (hybrid cloud): The hybrid cloud is a cloud computing environment including a private cloud resource and a public cloud resource.

Service control policy (service control policy, SCP): The service control policy is a mandatory access control policy that is applied to an identity in an organization in an organization service.

Resource control policy (resource control policy, RCP): The resource control policy is a mandatory access control policy that is applied to a resource in the organization in the organization service.

Cloud management platform and infrastructure: The cloud management platform is configured to manage an infrastructure of a cloud vendor. The infrastructure is a plurality of cloud data centers disposed in different regions, where at least one cloud data center is disposed in each region. The cloud management platform may provide an interface related to a cloud computing service, for example, a configuration page or an application programming interface (Application Programing Interface, API) for a tenant to access a cloud service. The tenant may log in to the cloud management platform by using a pre-registered account and password, and after the login succeeds, the tenant selects and purchases a cloud service provided by a cloud data center in a predetermined region. The cloud service is, for example, an object storage service, a virtual machine service, a container services, or another known cloud service.

Tenant: The tenant is a top-level object used to manage a cloud service and/or a cloud resource. The tenant registers a tenant account and sets a tenant password on the cloud management platform through a local client (for example, a browser). The tenant remotely logs in to the cloud management platform through the local client by using the tenant account and the set tenant password. The cloud management platform provides a configuration page or an API for the tenant to configure and use a cloud service. The cloud service is specifically provided by the infrastructure managed by the cloud management platform.

An embodiment of this application provides a resource access control method, which may be applied to any IT system (for example, a public cloud system, a private cloud system, or a hybrid cloud system) that needs to perform organizational management on a resource and perform unified control on a permission. A resource in an organization is used as an object to which a management and control policy of the organization is applied. In this way, the resource in the organization is controlled to deny access of an identity outside the organization, and security of the resource in the organization is ensured.

The following uses the public cloud system as an example to describe in detail a specific implementation of a resource access control method provided in embodiments of this application. Another IT system is similar to the public cloud system. For brevity, details are not described.

It may be understood that when the resource access control method provided in embodiments of this application is applied to the public cloud system, the resource access control method may also be referred to as a cloud resource access control method based on a cloud computing technology.

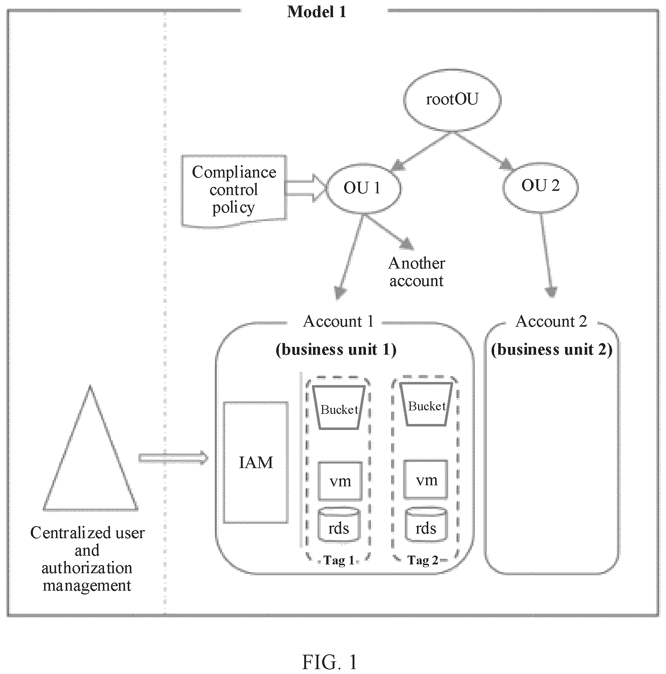

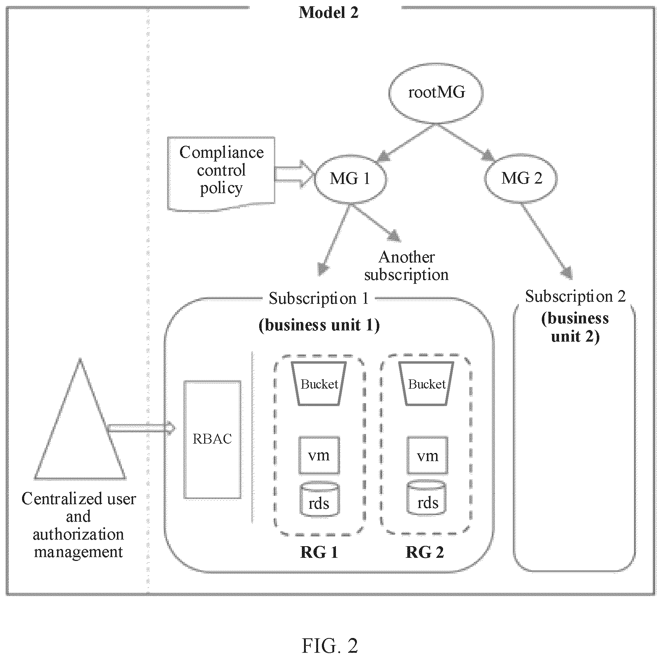

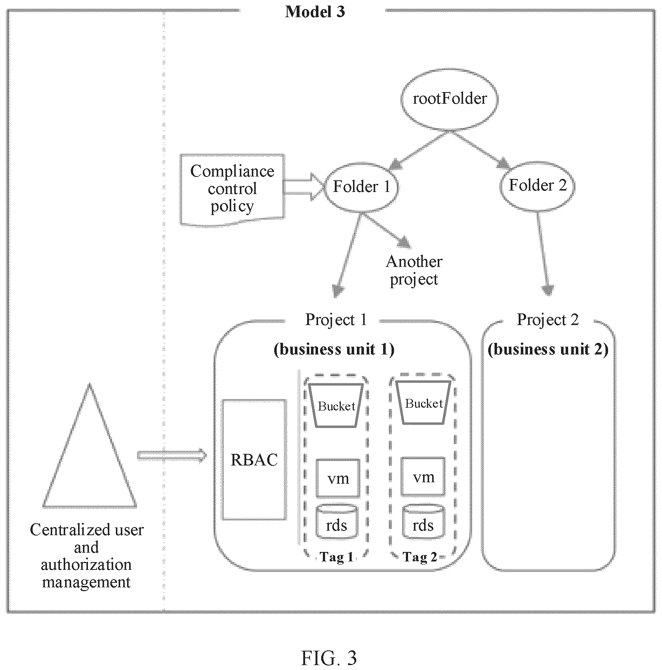

Most mainstream public cloud vendors provide organization management services. FIG. 1 to FIG. 3 respectively show organization management service models provided by different public cloud vendors. It can be learned that, for different public cloud vendors, an SoD unit has different names. An SoD unit in a model 1 shown in FIG. 1 is an account; an SoD unit in a model 2 shown in FIG. 2 is a subscription; and an SoD unit in a model 3 shown in FIG. 3 is a project.

Most organization management service models in a related technology are applied to an identity in the SoD unit, but cannot directly constrain a cloud resource in the SoD. This causes some problems.

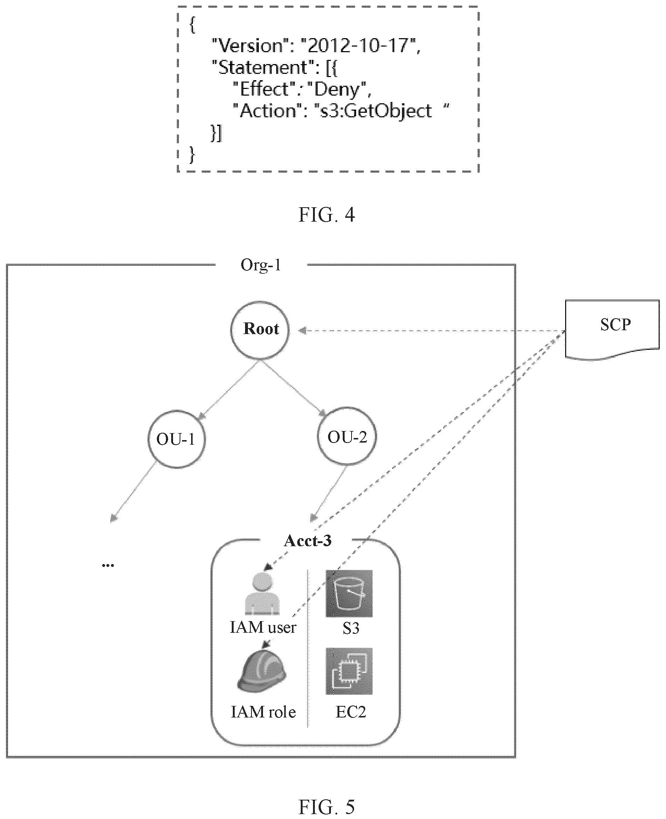

The model 1 is used as an example. In terms of an organization compliance control capability, the model 1 provides an SCP model. An SCP model is a MAC model and includes a domain specific language (domain specific language, DSL) used to describe an access control policy. For example, FIG. 4 describes a policy of denying access to an s3:GetObject API.

A customer may create an SCP policy and bind the SCP policy to a tree node of an organization management service. After the binding is completed, identities in all accounts managed by the tree node are managed and controlled by the SCP policy. As shown in FIG. 5, after the SCP policy shown in FIG. 4 is bound to a root node of an organization, identities in all accounts in the organization are denied to access the s3:GetObject API.

In an organization management service solution of each public cloud vendor, the SoD unit includes two types of objects: an identity and a resource. In this scenario, it should be noted that an object to which an organization compliance control policy (for example, the SCP) is applied is an identity in an organization. For example, in an example shown in FIG. 5, all identities (an IAM user and an IAM role) in an account 3 (Acct-3) cannot invoke the s3:GetObject API. The model has the following disadvantages.

In the organization management service, as the SoD unit, the account also carries responsibility of a resource container. The SCP can constrain only an identity in the account but cannot constrain a resource in the account. In a multi-account environment of an organization, a resource is frequently shared across accounts. It is a common customer requirement that the resource in the organization is controlled not to be illegally accessed by an identity outside the organization. The foregoing organization management service model cannot implement this function.

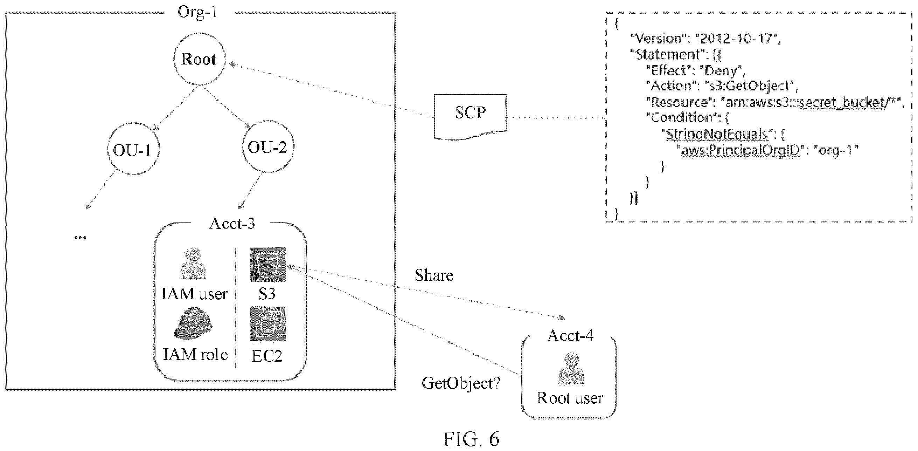

For example, in an example shown in FIG. 6, an administrator of an organization wants to constrain, through the SCP, an identity outside the organization from accessing S3 bucket data in the organization, but the account 3 (Acct-3) can share a bucket with an account (Acct-4) outside the organization to bypass the constraint. In this case, the account 4 (Acct-4) still has permission to access bucket data in the account 3 (Acct-3) because the SCP cannot constrain the identity outside the organization from accessing a resource in the organization.

Another typical scenario is that the administrator of the organization wants to constrain a case in which the resource in the organization can be accessed only by a fixed IP network segment, for example, a public network segment in which an enterprise is located. This constraint cannot be implemented through the SCP policy.

For the foregoing problem, an embodiment of this application provides a cloud resource access control method based on a cloud computing technology, so that an administrator of an organization can perform unified access control on a resource in the organization. For example, a cloud resource in a target organization is forbidden from being accessed by a user outside the target organization, or a cloud resource in a target organization node is forbidden from being accessed by a user outside the target organization node.

Specific implementations of the cloud resource access control method based on a cloud computing technology and a cloud management platform provided in embodiments of this application are described in detail below with reference to the accompanying drawings.

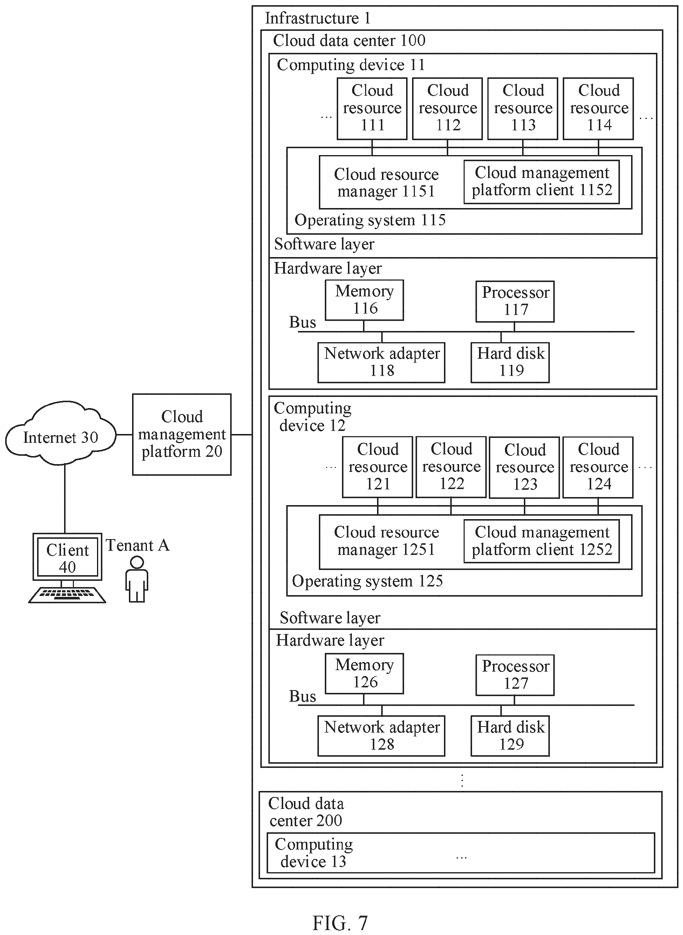

FIG. 7 is a diagram of an architecture of a system to which a cloud resource access control method based on a cloud computing technology according to an embodiment of this application may be applied. As shown in FIG. 7, the system includes a cloud management platform 20 and an infrastructure 1. A tenant A may log in to the cloud management platform 20 through a client 40 over the Internet 30 by using an account and a password that are pre-registered on the cloud management platform 20, and manage a cloud resource in the infrastructure 1 through the cloud management platform 20. The tenant A may deploy an organization management service for the cloud resource in the infrastructure 1 on the cloud management platform 20. The infrastructure 1 includes a plurality of computing devices. For example, the infrastructure 1 includes a computing device 11, a computing device 12, and a computing device 13. For example, the computing device 11 includes a hardware layer and a software layer. The hardware layer includes a memory 116, a processor 117, a network adapter 118, and a hard disk 119. The software layer includes cloud resources 111, 112, 113, 114, and the like, and an operating system 115 of the computing device 11. The operating system 115 includes a cloud resource manager 1151 and a cloud management platform client 1152, where the cloud resource manager 1151 is configured to manage a plurality of cloud resources, and communicate with the cloud management platform 20 through the cloud management platform client 1152. It should be noted that in this embodiment of this application, there may be one or more computing devices in the infrastructure, and there may be one or more cloud resources in the computing device. This is not limited in this embodiment of this application.

For example, the infrastructure 1 includes at least one cloud data center, for example, a cloud data center 100 and a cloud data center 200 in FIG. 7. A plurality of computing devices are disposed in each cloud data center. For example, the computing device 11 and the computing device 12 are disposed in the cloud data center 100, and the computing device 13 is disposed in the cloud data center 200. One or any combination of the plurality of cloud resources is deployed in at least one computing device of the infrastructure 1, for example, the cloud resource 111, the cloud resource 112, the cloud resource 113, and the cloud resource 114 are deployed in the computing device 11, and a cloud resource 121, a cloud resource 122, a cloud resource 123, and a cloud resource 124 are deployed in the computing device 12. A plurality of cloud resources of a tenant may be set in an organization.

The computing device 11, the computing device 12, and the computing device 13 may be servers. The server may be an independent physical server, or may be a server cluster including a plurality of physical servers or a distributed system. The server provides various cloud services, for example, basic cloud computing services such as a cloud database, cloud computing, and cloud storage.

The server involved in this solution may be a hardware server, or may be embedded in a virtualization environment. For example, the server involved in this solution may be a virtual machine executed on a hardware server including one or more other virtual machines.

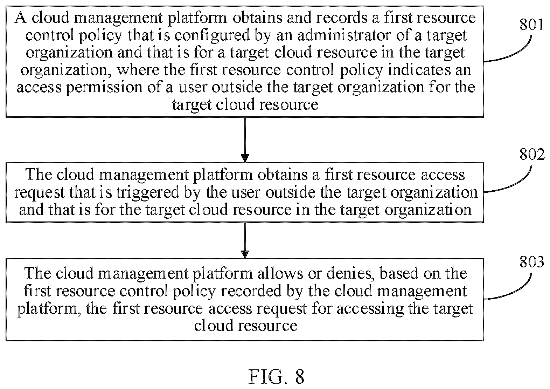

FIG. 8 is a schematic flowchart of a cloud resource access control method based on a cloud computing technology according to an embodiment of this application. The cloud resource access control method based on a cloud computing technology may be applied to the cloud management platform 20 shown in FIG. 7, to implement access control on a cloud resource in an organization. As shown in FIG. 8, the cloud resource access control method based on a cloud computing technology includes at least step S801 to step S803.

Step S801: A cloud management platform obtains and records a first resource control policy that is configured by an administrator of a target organization and that is for a target cloud resource in the target organization, where the first resource control policy indicates an access permission of a user outside the target organization for the target cloud resource.

The target organization may be any organization structure on which resource access control needs to be performed, for example, an enterprise, a government department, or a school. Members in the target organization include leaders and employees in the target organization, external visitors, and the like.

The target cloud resource may be any resource in the target organization. Before an resource access request in the target organization is received, the resources in the target organization may be divided. Specifically, the resources in the target organization may be divided into atomic-level indivisible resource units. In this case, a target resource may be one resource unit or a set including a plurality of resource units in the target organization.

In an organization management service, hierarchical management is usually performed on a resource corresponding to an organization. For example, an enterprise generally has a top-down tree organization structure. A capability of the hierarchical management is to organize SoD units in a tree structure, to facilitate management by operators of various departments of the enterprise.

Optionally, an organization structure of the target organization may be established based on department setting information of the target organization, and then organization structure information of the target organization is determined based on a member in the target organization, information about a department to which the member belongs, and the established organization structure. The organization structure may include a plurality of organization nodes, one organization node represents one department, and one department may include at least one member.

In an example, after establishment of the target organization is completed, a registration step is further included before step S801. For example, the cloud management platform obtains a plurality of registration requests that carry different user accounts; the cloud management platform respectively registers and records a plurality of user accounts based on the plurality of registration requests, where the plurality of user accounts include an account of the administrator; and the cloud management platform classifies the plurality of user accounts into the target organization, and sets the account of the administrator as an administrator account of the target organization.

Cloud resources in the target organization are divided and managed based on the organization structure information of the target organization. For example, financial resources (for example, a financial report) of an enterprise are classified into a node corresponding to a financial department, sales resources (for example, a sales report) of the enterprise are classified into a node corresponding to a sales department, and production resources (for example, a production report) of the enterprise are classified into a node corresponding to a production department.

The administrator of the target organization may create one or more RCPs, and binds the one or more RCPs to the entire organization (namely, to a root (root) node of the organization). Resources in all accounts in the organization are managed and controlled by the RCP.

The RCP bound to the entire target organization is an RCP corresponding to the target cloud resource. For example, if only one RCP 1 is bound to the root node of the target organization, the RCP corresponding to the target cloud resource is the RCP 1. If an RCP 1, an RCP 2, and an RCP 3 are bound to the root node of the target organization, RCPs corresponding to the target cloud resource are the RCP 1, the RCP 2, and the RCP 3.

There are a plurality of methods for determining the RCP corresponding to target cloud resource information. For example, an index table is established by using a resource identifier as an index of an RCP, and the RCP corresponding to the target cloud resource is quickly found by using a resource identifier and the index table. A plurality of index terms in the index table are determined based on a plurality of resource identifiers, and the plurality of resource identifiers are a plurality of resource identifiers corresponding to a plurality of cloud resources in the target organization.

Alternatively, a mapping table that records a mapping relationship between an organization and an RCP is established, an organization member to which the target cloud resource belongs is determined based on target cloud resource information, then the target organization to which the organization member belongs is found; and the mapping table is queried based on the target organization to obtain an RCP associated with the target organization, where the found RCP is the RCP corresponding to the target cloud resource.

It should be noted that the RCP is also a MAC policy, which does not provide a permission and is only used as a constraint.

The cloud management platform obtains and records a first RCP in the RCPs bound to the target organization, where the first RCP is the first RCP corresponding to the target cloud resource, and the first RCP indicates the access permission of the user outside the target organization for the target cloud resource.

For example, the first RCP includes at least a first constraint condition, where the first constraint condition is used to constrain a case in which an access user belongs to the target organization. When a resource access request is triggered by the user outside the target organization, that is, when the access user does not meet the first constraint condition, the first resource access request for accessing the target resource is denied.

Step S802: The cloud management platform obtains the first resource access request that is triggered by the user outside the target organization and that is for the target cloud resource in the target organization.

The user triggers the first resource access request for the target cloud resource in the target organization via a client (for example, the client 40 in FIG. 7), and the first resource access request is sent to the cloud management platform 20 over a network (for example, the Internet 30 in FIG. 7). In this way, the cloud management platform 20 obtains the first resource access request that is triggered by the user and that is for the target cloud resource in the target organization.

The first resource access request carries the target cloud resource information. The cloud management platform may locate a specific cloud resource, for example, the target cloud resource in the target organization, based on the target cloud resource information.

The target cloud resource information includes resource identification information, where the resource identification information may include any information that can identify a resource, for example, a resource identifier, information about a product to which the resource belongs, and information about a region in which the resource is located. A resource identifier may identify a specific cloud resource. Information about a product to which the cloud resource belongs may include information about a service indicating a cloud product to which the cloud resource belongs. Information about a region in which the cloud resource is located may include a name, an address, or the like of the region in which the cloud resource is located.

It may be understood that the target cloud resource may be a cloud resource of any type, for example, a virtual machine and a container for a computing service, a bucket for an object storage service, an EVS disk, and a cloud database.

The user is the user outside the target organization. In other words, there are two cases in which the user does not belong to the target organization. In one case, the user has registered a cloud account on a cloud, but the account does not belong to the target organization. For example, the first resource access request carries a user account registered by the user outside the target organization on the cloud management platform. After receiving the first resource access request, the cloud management platform obtains, through parsing, the user account carried in the first resource access request. When the user account does not belong to the plurality of user accounts corresponding to the target organization, the cloud management platform determines that the first resource access request is triggered by the user outside the target organization.

In other words, the access request is from another user on the cloud, and the user has performed registration on the cloud but is not in the target organization. The cloud management platform determines that the access request sent by the user is triggered by the user outside the target organization.

It should be explained that the user account may be, for example, any one or a combination of a user name, a real name, a mobile phone number, an identity card number, an employee number, or the like, provided that the user can be uniquely identified. This is not limited in this embodiment of this application.

It may be understood that, for different public cloud vendors, the user account may also have another name, for example, a user subscription and a user project.

In the other case, the user does not register an account on the cloud management platform, and the first resource access request does not carry a user account registered on the cloud management platform. When determining, through parsing, that the first resource access request does not carry the user account registered on the cloud management platform, the cloud management platform determines that the first resource access request is triggered by the user outside the target organization.

In other words, the access request is from another user off the cloud, and the user does not perform registration on the cloud (that is, the user has no account). The cloud management platform determines that the access request sent by the user is triggered by the user outside the target organization.

For example, a target cloud resource corresponding to the access request is a virtual machine. A web page is provided on the cloud for use by a public network, and a terminal (for example, a mobile phone or a personal computer) off the cloud may access a public network IP (a target public network IP) of the web page by using a source public network IP of the terminal.

Step S803: The cloud management platform allows or denies, based on the first resource control policy recorded by the cloud management platform, the first resource access request for accessing the target cloud resource.

The first RCP for the target cloud resource in the target organization and the first resource access request for the target cloud resource in the target organization are obtained in step S801 and step S802. Then, authentication is performed on the first resource access request based on the first RCP. If the authentication succeeds, the first resource access request for accessing the target cloud resource is allowed. If the authentication fails, the first resource access request for accessing the target cloud resource is denied.

Specifically, policy calculation is performed on the first resource access request based on the first RCP, to obtain a policy calculation result, where the policy calculation result indicates whether authentication on a resource access request succeeds.

For example, the first RCP includes a first constraint condition, where the first constraint condition is used to constrain a case in which an access user belongs to the target organization. When a resource access request is triggered by the user outside the target organization, the policy calculation result is that the resource access request does not meet the first constraint condition, that is, when the access user does not meet the first constraint condition, the authentication fails, and the first resource access request for accessing the target resource is denied.

A policy calculation process is a process of determining whether access request information meets a constraint condition of an RCP. For example, the RCP includes a constraint condition used to constrain that an access user belongs to the target organization, and in this case, the access user needs to belong to the target organization to meet the constraint condition. In other words, authentication on an access request may succeed and the access request for accessing a cloud resource in the target organization is allowed only when the access user belongs to the target organization. In this way, an identity outside an organization is denied to access a cloud resource in the organization, and a case in which an account in the organization shares a cloud resource with a member outside the organization for access and use in a multi-account scenario is avoided.

It can be learned from the foregoing that, according to the cloud resource access control method based on a cloud computing technology provided in this application, an RCP is directly applied to a resource in an organization, and directly constrains access to the resource in the organization, so that a user outside the organization can be constrained from accessing the cloud resource in the organization. For example, in a multi-account environment of an organization, when a resource is frequently shared across accounts, the resource in the organization is controlled not to be illegally accessed by the user outside the organization.

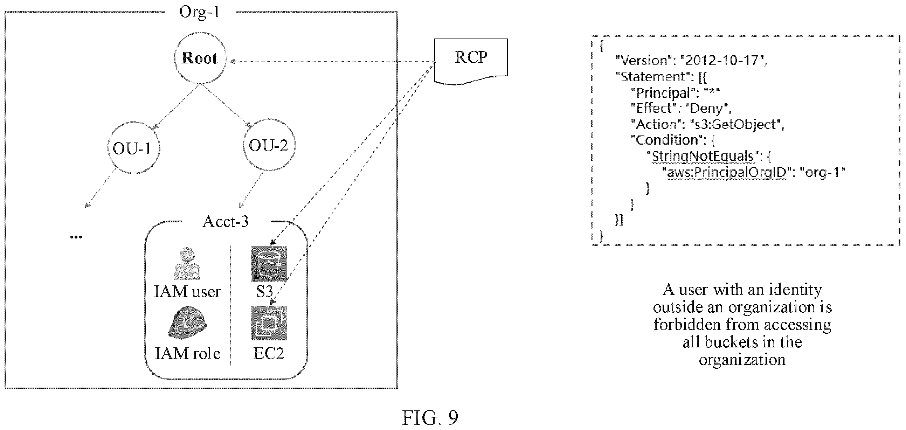

FIG. 9 shows that an RCP is set in a target organization by using the cloud resource access control method based on a cloud computing technology provided in this embodiment of this application, so that an identity outside the organization is forbidden from accessing target cloud resources (for example, cloud resources S3 and EC2 in Acct-3 in FIG. 9) in the target organization (for example, Org-1 in FIG. 9).

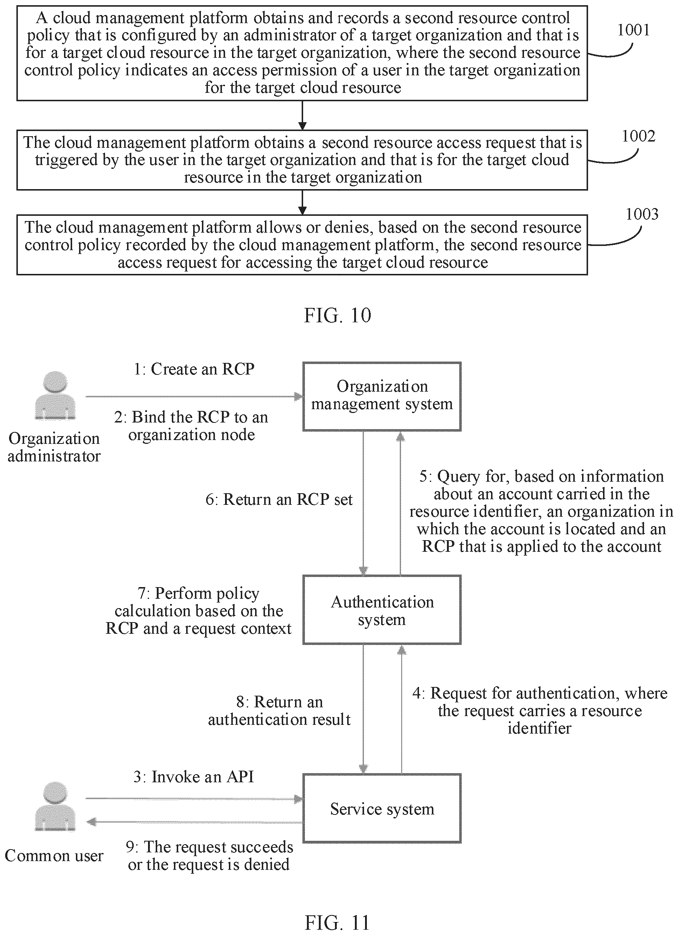

FIG. 10 shows another cloud resource access control method based on a cloud computing technology according to an embodiment of this application. The method may be applied to the cloud management platform 20 shown in FIG. 7, to control access of a user in an organization to a target cloud resource in the target organization. As shown in FIG. 10, the method includes at least step S1001 to step S1003.

Step S1001: A cloud management platform obtains and records a second resource control policy that is configured by an administrator of the target organization and that is for the target cloud resource in the target organization, where the second resource control policy indicates an access permission of a user in the target organization for the target cloud resource.

Establishment of the target organization and registration management of a user account are implemented in a manner similar to that of the method shown in FIG. 8. For details, refer to the foregoing descriptions. For brevity, details are not described herein again.

The administrator of the target organization may create one or more RCPs, and binds the one or more RCPs to a target organization node. Resources in all accounts in the target organization node are managed and controlled by the RCP.

The RCP bound to the target organization node is an RCP corresponding to a target cloud resource in the target organization node. For example, if only one RCP 1 is bound to the target organization node, the RCP corresponding to the target cloud resource is the RCP 1. If an RCP 1, an RCP 2, and an RCP 3 are bound to the target organization node, RCPs corresponding to the target cloud resource are the RCP 1, the RCP 2, and the RCP 3.

There are a plurality of methods for determining the RCP corresponding to target cloud resource information. For example, an index table is established by using a resource identifier as an index of an RCP, and the RCP corresponding to the target cloud resource is quickly found by using a resource identifier and the index table. A plurality of index terms in the index table are determined based on a plurality of resource identifiers, and the plurality of resource identifiers are a plurality of resource identifiers corresponding to a plurality of cloud resources in the target organization node.

Alternatively, a mapping table that records a mapping relationship between an organization node and an RCP is established, an organization member to which the target cloud resource belongs is determined based on target cloud resource information, then a target organization node to which the organization member belongs is found; and the mapping table is queried based on the target organization node to obtain an RCP associated with the target organization node, where the found RCP is the RCP corresponding to the target cloud resource.

The cloud management platform obtains and records a second RCP in the RCP bound to the target organization node, where the second RCP is a second RCP corresponding to the target cloud resource, and the second RCP indicates an access permission of the user in the target organization for the target cloud resource.

Step S1002: The cloud management platform obtains a second resource access request that is triggered by the user in the target organization and that is for the target cloud resource in the target organization.

The user in the target organization triggers the second resource access request for the target cloud resource in the target organization via a client, and the second resource access request is sent to the cloud management platform 20 over a network (for example, the Internet 30 in FIG. 7). In this way, the cloud management platform 20 obtains the second resource access request that is triggered by the user and that is for the target cloud resource in the target organization.

The second resource access request carries target cloud resource information. The cloud management platform may locate a specific cloud resource, for example, the target cloud resource in the target organization, based on the target cloud resource information.

The target cloud resource information includes resource identification information, where the resource identification information may include any information that can identify a resource, for example, a resource identifier, information about a product to which the resource belongs, and information about a region in which the resource is located. A resource identifier may identify a specific cloud resource. Information about a product to which the cloud resource belongs may include information about a service indicating a cloud product to which the cloud resource belongs. Information about a region in which the cloud resource is located may include a name, an address, or the like of the region in which the cloud resource is located.

After receiving the second resource access request, the cloud management platform obtains, through parsing, a user account carried in the second resource access request. When the user account belongs to a plurality of user accounts corresponding to the target organization, the cloud management platform determines that the second resource access request is triggered by the user in the target organization.

Step S1003: The cloud management platform allows or denies, based on the second resource control policy recorded by the cloud management platform, the second resource access request for accessing the target cloud resource.

The second RCP for the target cloud resource in the target organization and the second resource access request for the target cloud resource in the target organization are obtained through step S1001 and step S1002. Then, authentication is performed on the second resource access request based on the second RCP. If the authentication succeeds, the second resource access request for accessing the target cloud resource is allowed. If the authentication fails, the second resource control policy for accessing the target cloud resource is denied.

Specifically, policy calculation is performed on the second resource access request based on the second RCP, to obtain a policy calculation result, where the policy calculation result indicates whether authentication on a resource access request succeeds.

For example, the second RCP includes a second constraint condition, where the second constraint condition is used to constrain a case in which an access user belongs to the target organization node. When a resource access request is triggered by a user in the target organization but outside the target organization node, the policy calculation result is that the resource access request does not meet the first constraint condition, that is, when the access user does not meet the second constraint condition, the authentication fails, and the second resource access request for accessing the target resource is denied.

When an administrator does not want a resource in a specific department to be accessed by an organization member of another department, for example, a colleague of a non-financial department is controlled to access a resource in a financial department, the administrator may set a second RCP, where the second RCP includes a constraint condition used to constrain a case in which an access user belongs to a target organization node (the target organization node is an organization node corresponding to the financial department), and the access user needs to belong to the target organization node to meet the constraint condition. In other words, authentication on an access request may succeed and a resource in the target organization node is allowed to be accessed only when the access user belongs to the target organization node. In this way, a user with an identity outside an organization is denied to access a resource in the organization, and a case in which an account in the organization node shares a resource with a member outside the organization node for access and use in a multi-account scenario is avoided. In other words, a case in which a member in a non-specific department accesses a cloud resource in a specific department node is avoided.

An RCP is a MAC model. The RCP is a constraint condition set described by using a DSL, and may accurately describe a resource set and an operation set that are allowed or denied to be accessed, and an allow condition or a deny condition. One or more RCPs may be bound to an organization or an organization node. The RCP includes a cloud resource identifier field (resource), an effect field (effect), a request type field (action), and a condition field (condition), where the cloud resource identifier field identifies the target cloud resource, the effect field identifies that access to the target cloud resource is denied or allowed, the request type field identifies a request type of the first resource access request, and the condition field indicates a user outside the target organization.

Refer to FIG. 9. A plurality of fields may include Version, Statement, Effect, Action, Resource, Condition, and the like, and each field corresponds to one policy element in the RCP. The following describes the fields in the RCP.

Version: Version is an optional policy element (string), for example, "Version": "2012-10-17", indicating a version of an RCP document. An RCP document version of a cloud service provider may have only one value: 2012-10-17. If there is no Version element in the RCP, a default value of the RCP document version is 2012-10-17.

Statement: Statement is a mandatory element (array), for example, "Statement": [{...},{...},{... }]. The statement is a main element of the policy and is used to describe a specific constraint rule. Each Statement element may include a plurality of statements, and each statement is enclosed by {}.

Effect: Effect is a mandatory element (string), for example, "Effect": "Deny". Effect is a component element of the constraint rule of Statement, each constraint rule needs to include the element, and the element has only two values: Allow or Deny, which respectively represents "explicit authorization" and "explicit deny".

Action: Action is a mandatory element (string), for example, "Action": "s3:GetObject". Action is a component element of the constraint rule of Statement, and each constraint rule needs to include the element. A value includes two parts: service-name and action-name. Service-name is a namespace (for example, s3 in FIG. 9) of a cloud service, and action-name is an operation name (for example, GetObject in FIG. 9) of each product. Values of service-name and action-name are case insensitive, and the operation name may include a wildcard character *.

Resource: Resource is a mandatory element (string). * may be used to indicate all resource objects, or a specific restricted resource scope and a project to which resources belong may be used, for example, "arn: aws: s3...secret_bucket/*" in FIG. 9.

Condition: Condition is an optional element (string), and is a restriction condition in which a constraint condition is in effect.

It should be noted that when there are both Allow and Deny constraint statements in an SCP, Deny takes precedence.

When policy calculation is performed on a resource access request and an RCP corresponding to the resource access request, if an effect of the policy corresponding to the resource access request is Allow, a calculation result is true (that is, access is allowed), and authentication succeeds. If the effect of the policy is Deny, the calculation result is false (that is, the access is denied), and the authentication fails.

The RCP shown in FIG. 9 is used as an example to describe policy calculation performed on a resource access request based on the RCP. Main elements of Statement policy in the RCP are respectively "Effect":"Deny"; "Action":"s3:GetObject"; and "Conditon": {"StringNotEquals": {"aws:PrincepalOrgID":"org-1"}. In other words, all buckets in an organization org-1 (namely, a target organization) are forbidden from being accessed by an identity outside the organization org-1 (namely, the target organization). In other words, authentication on an access request succeeds and a bucket resource in the target organization is allowed to be accessed only when an access user belongs to the target organization.

The RCP may be set based on an actual requirement. For example, the RCP includes a constraint condition used to constrain a case in which a source public network IP of a resource access request belongs to a preset IP network segment. The cloud management platform parses resource access request information to obtain context information of the resource access request, where the context information includes IP network segment information, to be specific, the source public network IP of the resource access request. An RCP corresponding to a target cloud resource includes a constraint condition in which a source public network IP of a resource access request belongs to a preset IP network segment. In this case, the constraint condition can be met only when the source public network IP of the resource access request belongs to the preset IP network segment. In other words, authentication on the resource access request may succeed and the resource access request for accessing the resource in the target organization is allowed only when the source public network IP of the resource access request belongs to the preset IP network segment. In this way, the resource in the target organization can be accessed only when an access request is sent from a specific network segment.

For example, an administrator creates an RCP and binds the RCP to a root node of a target organization, where the RCP includes a constraint condition used to constrain a case in which a source public network IP of a resource access request belongs to a public network segment in which the target organization is located. In this case, a cloud resource in the organization can be allowed to be accessed only when a resource access request is sent from the public network segment in which the target organization is located.

In another example, to manage a resource in an organization in a more refined manner, an administrator may alternatively create an RCP and bind the RCP to a target organization or a target node of the target organization, where the RCP includes a constraint condition used to constrain a case in which an operation on a target resource belongs to a preset operation. Resource access request information carries operation information, where the operation information indicates the operation performed on the target resource. In this case, authentication on a resource access request may succeed and the operation is allowed to be performed on the resource in the target organization only when the operation belongs to the preset operation.

For example, the administrator creates an RCP and binds the RCP to a target organization node, where the RCP includes a constraint condition used to constrain a case in which an operation belongs to a read operation. In this case, only a resource access request of the read operation for accessing a resource in the organization can be allowed, that is, only the read operation is allowed to be performed on the resource in the target organization node.

It may be understood that when there are a plurality of RCPs corresponding to a target resource, authentication succeeds only when a resource access request meets all the RCPs corresponding to the target resource. For example, resource access request information includes target resource information, access user information, operation information for the target resource, and IP network segment information. The RCPs corresponding to the target resource include an RCP 1, an RCP 2, and an RCP 3. A constraint condition included in the RCP 1 is that an access user belongs to a target organization node, a constraint condition included in the RCP 2 is that an operation is a read operation, and a constraint condition included in the RCP 3 is that an IP network segment is a public network segment in which a target organization is located. Policy calculation is respectively performed on a resource access request, the RCP 1, the RCP 2, and the RCP 3. Authentication succeeds only when all policy calculation results pass. In other words, through the RCP 1, the RCP 2, and the RCP 3, authentication succeeds only when a member in the target organization node sends a read operation request from the public network segment in which the target organization is located succeeds. In other words, only the member in the target organization node is allowed to perform the read operation on a resource in the target organization node from the public network segment in which the target organization is located.

The following describes, by using a specific example, a specific implementation of the cloud resource access control method based on a cloud computing technology provided in embodiments of this application.

As shown in FIG. 11, a cloud management platform includes three systems: an organization management system, an authentication system, and a service system. The organization management system provides an interface for creating an RCP and binding the RCP for a customer (for example, an organization administrator). The service system provides a specific API, collects resource information (for example, a resource identifier) included in a user request (for example, a resource access request), and transfers the resource information to the authentication system. The authentication system queries for, based on the received resource identifier, an organization in which an account to which the resource belongs is located from the organization management system, and obtains all RCPs that take effect on the account. The authentication system performs policy calculation based on an RCP corresponding to a target account and the user request, determines whether the user request for accessing is allowed, and returns a result to the service system.

FIG. 11 shows an implementation process of a cloud resource access control method based on a cloud computing technology in a specific application scenario according to an embodiment of this application. As shown in FIG. 11, the organization administrator first creates an RCP in step S1 and then binds the RCP to an organization node in step S2 to implement access control on a resource in an organization or the organization node.

When a common user needs to access the resource in the organization, the common user sends a request for invoking the API to the service system in step S3, where the request for invoking the API carries a resource identifier. Then, the service system sends an authentication request to the authentication system in step S4, where the authentication request carries the resource identifier, and the resource identifier uniquely identifies a target resource. Optionally, the resource identifier includes information about an account to which the resource belongs.

In step S5, the authentication system sends, to the organization management system, a request for querying for an RCP corresponding to the target resource, and the organization management system queries for, based on the information about the account carried in the resource identifier, an organization in which the account is located and an RCP that is applied to the account.

In step S6, the organization management system returns a found RCP set corresponding to the target resource to the authentication system.

In step S7, the authentication system performs policy calculation based on the RCP and a request context (to be specific, target resource information, access user information, operation information, and IP network segment information that are carried in a resource access request), where a policy calculation result indicates whether authentication succeeds.

The authentication system returns an authentication result to the service system in step S8. In step S9, the service system responds to a request of the user. If the authentication succeeds, the service system feeds back an access result to the user; or if the authentication fails, the service system returns, to the user, a result of denying the request.

It may be understood that the organization management system, the authentication system, and the service system may be distributed in different servers, or may be implemented by different modules in a server. This is not limited in this embodiment of this application. In a public cloud scenario, the organization management system is a corresponding cloud service. Different public cloud vendors correspondingly have different names, for example, a resource directory service and an organization service. The authentication system corresponds to an access control service on a cloud. The service system corresponds to various cloud services, for example, S3, EC2, and OBS.

To implement the cloud resource access control method based on a cloud computing technology provided in embodiments of this application, an embodiment of this application further provides a cloud management platform. The cloud management platform is configured to manage an infrastructure that provides a plurality of cloud resources, the infrastructure includes at least one cloud data center, a plurality of servers are disposed in each cloud data center, one or any combination of the plurality of cloud resources is deployed in at least one server of the infrastructure, the plurality of cloud resources are set in at least one organization.

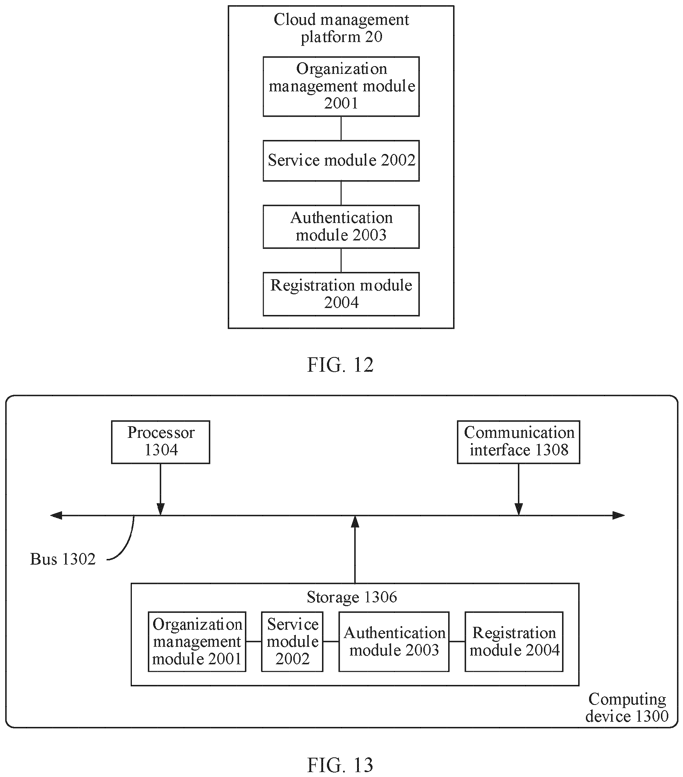

FIG. 12 is a diagram of a structure of a cloud management platform according to an embodiment of this application. As shown in FIG. 12, the cloud management platform 20 includes an organization management module 2001, a service module 2002, and an authentication module 2003. The organization management module 2001 is configured to obtain and record a first resource control policy that is configured by an administrator of a target organization and that is for a target cloud resource in the target organization, where the first resource control policy indicates an access permission of a user outside the target organization for the target cloud resource; the service module 2002 is configured to obtain a first resource access request that is triggered by the user outside the target organization and that is for the target cloud resource in the target organization; the authentication module 2003 is configured to determine a first authentication result based on the first resource control policy recorded by the organization management module, where the first authentication result is allowing or denying the first resource access request for accessing the target cloud resource; and the service module is further configured to obtain the first authentication result from the authentication module, and allow or deny, based on the first authentication result, the first resource access request for accessing the target cloud resource.

In a possible implementation, the organization management module 2001 is further configured to obtain and record a second resource control policy that is configured by the administrator of the target organization and that is for the target cloud resource in the target organization, where the second resource control policy indicates an access permission of a user in the target organization for the target cloud resource; the service module 2002 is further configured to obtain a second resource access request that is triggered by the user in the target organization and that is for the target cloud resource in the target organization; the authentication module 2003 is configured to determine a second authentication result based on the second resource control policy recorded by the organization management module, where the second authentication result is allowing or denying the second resource access request for accessing the target cloud resource; and the service module is further configured to obtain the second authentication result from the authentication module, and allow or deny, based on the second authentication result, the second resource access request for accessing the target cloud resource.

In another possible implementation, the cloud management platform further includes a registration module 2004. The registration module 2004 is configured to obtain a plurality of registration requests that carry different user accounts, and respectively register and record a plurality of user accounts based on the plurality of registration requests, where the plurality of user accounts include an account of the administrator; and the organization management module 2001 is configured to classify the plurality of user accounts into the target organization, and set the account of the administrator as an administrator account of the target organization.

In another possible implementation, the first resource access request carries a user account registered by the user outside the target organization on the cloud management platform; and the service module is configured to: when determining that the user account carried in the first resource access request does not belong to the plurality of user accounts that correspond to the target organization and that are recorded by the registration module, determine that the first resource access request is triggered by the user outside the target organization.

In another possible implementation, the first resource access request does not carry a user account registered on the cloud management platform, and the service module is configured to: when determining that the first resource access request does not carry the user account registered on the cloud management platform, determine that the first resource access request is triggered by the user outside the target organization.

In another possible implementation, the first resource control policy includes a cloud resource identifier field, an effect field, a request type field, and a condition field, where the cloud resource identifier field identifies the target cloud resource, the effect field identifies that access to the target cloud resource is denied or allowed, the request type field identifies a request type of the first resource access request, and the condition field indicates a user outside the target organization.

In another possible implementation, a type of the cloud resource includes a virtual machine and a container for a computing service, a bucket for an object storage service, an EVS disk, and a cloud database.

It may be understood that the organization management module, the service module, the authentication module, and the registration module in the cloud management platform may be distributed in different servers, or may be implemented by different modules in a server. This is not limited in this embodiment of this application. In a public cloud scenario, the organization management module is a corresponding organization management service. Different public cloud vendors correspondingly have different names, for example, a resource directory service and an organization service. The service module corresponds to various cloud services, for example, a computing service, a storage service, and a network service. The authentication module corresponds to an authentication service on a cloud. The registration module corresponds to a registration service on the cloud.

The organization management module 2001, the service module 2002, the authentication module 2003, and the registration module 2004 may all be implemented by using software, or may be implemented by using hardware. For example, the following uses the organization management module 2001 as an example to describe an implementation of the organization management module 2001. Similarly, for implementations of the service module 2002, the authentication module 2003, and the registration module 2004, refer to the implementation of the organization management module 2001.

The module is used as an example of a software functional unit, and the organization management module 2001 may include code running on a computing instance. The computing instance may include at least one of a physical host (a computing device), a virtual machine, and a container. Further, there may be one or more computing instances. For example, the organization management module 2001 may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit. The organization management module 2001 may include at least one computing device, for example, a server. Alternatively, the organization management module 2001 may be a device implemented by using an application-specific integrated circuit (application-specific integrated circuit, ASIC), a programmable logic device (programmable logic device, PLD), or the like. The PLD may be implemented by a complex programmable logic device (complex programmable logical device, CPLD), a field-programmable gate array (field-programmable gate array, FPGA), generic array logic (generic array logic, GAL), or any combination thereof.

A plurality of computing devices included in the organization management module 2001 may be distributed in a same region, or may be distributed in different regions. A plurality of computing devices included in the organization management module 2001 may be distributed in a same AZ, or may be distributed in different AZs. Similarly, a plurality of computing devices included in the organization management module 2001 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, the organization management module 2001 may be configured to perform any step in the cloud resource access control method based on a cloud computing technology, the service module 2002 may be configured to perform any step in the cloud resource access control method based on a cloud computing technology, and the authentication module 2003 may be configured to perform any step in the cloud resource access control method based on a cloud computing technology. Steps whose implementations are responsible by the organization management module 2001, the service module 2002, the authentication module 2003, and the registration module 2004 may be specified as required. The organization management module 2001, the service module 2002, the authentication module 2003, and the registration module 2004 are respectively configured to implement different steps in the cloud resource access control method based on a cloud computing technology, to implement all functions of the cloud management platform.

This application further provides a computing device 1300. As shown in FIG. 13, the computing device 1300 includes: a bus 1302, a processor 1304, a storage 1306, and a communication interface 1308. The processor 1304, the storage 1306, and the communication interface 1308 communicate with each other through the bus 1302. The computing device 1300 may be a server or a terminal device. It should be understood that quantities of processors and storages in the computing device 1300 are not limited in this application.

The bus 1302 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 13. However, it does not indicate that there is only one bus or only one type of bus. The bus 1302 may include a path for transmitting information between components (for example, the storage 1306, the processor 1304, and the communication interface 1308) of the computing device 1300.

The processor 1304 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 1306 may include a volatile memory (volatile memory), for example, a random access memory (random access memory, RAM). The storage 1306 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 1306 stores executable program code, and the processor 1304 executes the executable program code to separately implement functions of the organization management module 2001, the service module 2002, the authentication module 2003, and the registration module 2004, so as to implement the cloud resource access control method based on a cloud computing technology. In other words, the storage 1306 stores instructions used to perform the cloud resource access control method based on a cloud computing technology.

The communication interface 1308 implements communication between the computing device 1300 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

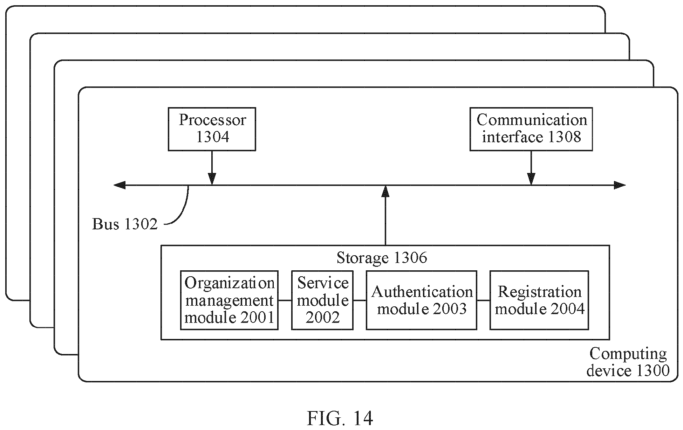

As shown in FIG. 14, the computing device cluster includes at least one computing device 1300. The storage 1306 in one or more computing devices 1300 in the computing device cluster may store same instructions used to perform the cloud resource access control method based on a cloud computing technology.

In some possible implementations, the storage 1306 in the one or more computing devices 1300 in the computing device cluster may alternatively separately store some instructions used to perform the cloud resource access control method based on a cloud computing technology. In other words, a combination of the one or more computing devices 1300 may jointly execute instructions used to perform the cloud resource access control method based on a cloud computing technology.

It should be noted that storages 1306 in different computing devices 1300 in the computing device cluster may store different instructions, which are respectively used to perform some functions of the cloud management platform. In other words, instructions stored in the storages 1306 in different computing devices 1300 may implement functions of one or more of the organization management module 2001, the service module 2002, the authentication module 2003, and the registration module 2004.

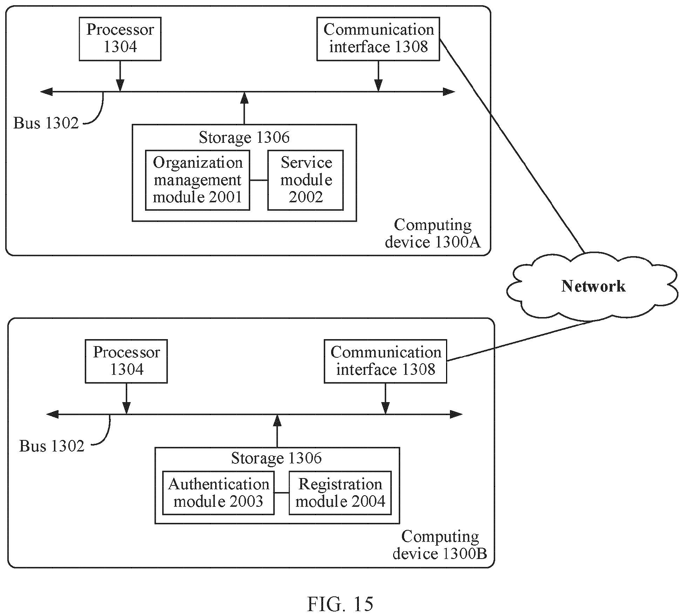

In some possible implementations, the one or more computing devices in the computing device cluster may be connected through a network. The network may be a wide area network, a local area network, or the like. FIG. 15 shows a possible implementation. As shown in FIG. 15, two computing devices 1300A and 1300B are connected through a network. Specifically, each computing device is connected to the network through a communication interface of the computing device. In this type of possible implementation, a storage 1306 in the computing device 1300A stores instructions for performing functions of the organization management module 2001 and the service module 2002. In addition, a storage 1306 in the computing device 1300B stores instructions for performing functions of the authentication module 2003 and the registration module 2004.

It should be understood that functions of the computing device 1300A shown in FIG. 15 may alternatively be completed by a plurality of computing devices 1300. Similarly, functions of the computing device 1300B may alternatively be completed by a plurality of computing devices 1300.

An embodiment of this application further provides a computer program product including instructions. The computer program product may be a software or program product that includes the instructions and that can run on a computing device or be stored in any usable medium. When the computer program product runs on at least one computing device, the at least one computing device is enabled to perform the cloud resource access control method based on a cloud computing technology.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a computing device to perform the cloud resource access control method based on a cloud computing technology.

In the foregoing embodiments, the descriptions of each embodiment have respective focuses. For a part that is not described in detail in an embodiment, refer to related descriptions in other embodiments.

The foregoing describes the basic principles of this application with reference to specific embodiments. However, it should be noted that advantages, benefits, effects, and the like mentioned in this application are merely examples rather than limitations, and it cannot be considered that these advantages, benefits, effects, and the like are mandatory for embodiments of the present disclosure. In addition, the specific details disclosed above are merely intended for purpose of example and for ease of understanding, but are not intended to limit. The foregoing details do not limit a case in which the present disclosure needs to be implemented by using the foregoing specific details.

Block diagrams of the apparatus, the device, and the system in the present disclosure are merely examples, and are not intended to require or imply that connections, arrangements, and configurations need to be performed in a manner shown in the block diagrams. A person skilled in the art will recognize that the component, the apparatus, the device, and the system may be connected, arranged, and configured in any manner. Words such as "include", "contain", and "have" are open words, refer to "including but not limited to", and may be used interchangeably. The terms "or" and "and" used herein refer to the terms "and/or", and may be used interchangeably, unless the context explicitly indicates otherwise. The word "such as" used herein refers to a phrase "such as but not limited to", and may be used interchangeably.

It should be further noted that in the apparatus, the device, and the method disclosed in the present disclosure, the components or the steps may be decomposed and/or recombined. The decomposition and/or recombination should be considered as equivalent solutions of the present disclosure.

The foregoing descriptions have been provided for the purpose of illustration and description. In addition, the descriptions are not intended to limit embodiments of the present disclosure to the form disclosed herein. Although a plurality of example aspects and embodiments have been discussed above, a person skilled in the art will recognize some of their variations, modifications, changes, additions, and sub-combinations.

It may be understood that various numbers in embodiments of this application are merely used for differentiation for ease of description, and are not used to limit the scope of embodiments of this application.

A person skilled in the art may be further aware that, in combination with the examples described in embodiments disclosed in this specification, units and algorithm steps may be implemented by electronic hardware, computer software, or a combination of the two. To clearly describe interchangeability between the hardware and the software, compositions and steps of each example have generally been described in the foregoing specification based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The steps in the method or algorithm described in embodiments disclosed in this specification may be implemented by hardware, software module executed by the processor, or combination of hardware and software. The software module may be inserted in a random access memory (RAM), read only memory (ROM), electrically programmable ROM, electrically erasable programmable ROM, register, hard disk, movable disk, CD-ROM, or storage medium of any other form know in the technical field.

In the foregoing specific implementations, the objective, technical solutions, and benefits of this application are further described in detail. It should be understood that the foregoing descriptions are merely specific implementations of this application, but are not intended to limit the protection scope of this application. Any modification, equivalent replacement, or improvement made without departing from the principle of this application should fall within the protection scope of this application.

## Claims

1. A cloud resource access control method based on a cloud computing technology, wherein the method is applied to a cloud management platform, the cloud management platform is configured to manage an infrastructure that provides a plurality of cloud resources, the infrastructure comprises at least one cloud data center, a plurality of servers are disposed in each cloud data center, one or any combination of the plurality of cloud resources is deployed in at least one server of the infrastructure, the plurality of cloud resources are set in at least one organization, and the method comprises:
obtaining and recording, by the cloud management platform, a first resource control policy that is configured by an administrator of a target organization and that is for a target cloud resource in the target organization, wherein the first resource control policy indicates an access permission of a user outside the target organization for the target cloud resource;
obtaining, by the cloud management platform, a first resource access request that is triggered by the user outside the target organization and that is for the target cloud resource in the target organization; and
allowing or denying, by the cloud management platform based on the first resource control policy recorded by the cloud management platform, the first resource access request for accessing the target cloud resource.

2. The method according to claim 2, wherein the method further comprises:
obtaining and recording, by the cloud management platform, a second resource control policy that is configured by the administrator of the target organization and that is for the target cloud resource in the target organization, wherein the second resource control policy indicates an access permission of a user in the target organization for the target cloud resource;
obtaining, by the cloud management platform, a second resource access request that is triggered by the user in the target organization and that is for the target cloud resource in the target organization; and
allowing or denying, by the cloud management platform based on the second resource control policy recorded by the cloud management platform, the second resource access request for accessing the target cloud resource.

3. The method according to claim 1 or 2, wherein before the obtaining and recording, by the cloud management platform, a first resource control policy that is configured by an administrator of a target organization and that is for a target cloud resource in the target organization, the method further comprises:
obtaining, by the cloud management platform, a plurality of registration requests that carry different user accounts;
respectively registering and recording, by the cloud management platform, a plurality of user accounts based on the plurality of registration requests, wherein the plurality of user accounts comprise an account of the administrator; and
classifying, by the cloud management platform, the plurality of user accounts into the target organization, and setting the account of the administrator as an administrator account of the target organization.

4. The method according to claim 3, wherein the first resource access request carries a user account registered by the user outside the target organization on the cloud management platform, and the obtaining, by the cloud management platform, a first resource access request that is triggered by the user outside the target organization and that is for the target cloud resource in the target organization comprises:
when determining that the user account carried in the first resource access request does not belong to the plurality of user accounts corresponding to the target organization, determining, by the cloud management platform, that the first resource access request is triggered by the user outside the target organization.

5. The method according to claim 3, wherein the first resource access request does not carry a user account registered on the cloud management platform, and the obtaining, by the cloud management platform, a first resource access request that is triggered by the user outside the target organization and that is for the target cloud resource in the target organization comprises:
when determining that the first resource access request does not carry the user account registered on the cloud management platform, determining, by the cloud management platform, that the first resource access request is triggered by the user outside the target organization.

6. The method according to any one of claims 1 to 5, wherein the first resource control policy comprises a cloud resource identifier field, an effect field, a request type field, and a condition field, wherein the cloud resource identifier field identifies the target cloud resource, the effect field identifies that access to the target cloud resource is denied or allowed, the request type field identifies a request type of the first resource access request, and the condition field indicates a user outside the target organization.

7. The method according to any one of claims 1 to 6, wherein a type of the cloud resource comprises a virtual machine and a container for a computing service, a bucket for an object storage service, an EVS disk, and a cloud database.

8. A cloud management platform, wherein the cloud management platform is configured to manage an infrastructure that provides a plurality of cloud resources, the infrastructure comprises at least one cloud data center, a plurality of servers are disposed in each cloud data center, one or any combination of the plurality of cloud resources is deployed in at least one server of the infrastructure, the plurality of cloud resources are set in at least one organization, and the cloud management platform comprises:
an organization management module, configured to obtain and record a first resource control policy that is configured by an administrator of a target organization and that is for a target cloud resource in the target organization, wherein the first resource control policy indicates an access permission of a user outside the target organization for the target cloud resource;
a service module, configured to obtain a first resource access request that is triggered by the user outside the target organization and that is for the target cloud resource in the target organization; and
an authentication module, configured to determine a first authentication result based on the first resource control policy recorded by the organization management module, wherein the first authentication result is allowing or denying the first resource access request for accessing the target cloud resource, wherein
the service module is further configured to obtain the first authentication result from the authentication module, and allow or deny, based on the first authentication result, the first resource access request for accessing the target cloud resource.

9. The cloud management platform according to claim 8, wherein
the organization management module is further configured to obtain and record a second resource control policy that is configured by the administrator of the target organization and that is for the target cloud resource in the target organization, wherein the second resource control policy indicates an access permission of a user in the target organization for the target cloud resource;
the service module is further configured to obtain a second resource access request that is triggered by the user in the target organization and that is for the target cloud resource in the target organization;
the authentication module is configured to determine a second authentication result based on the second resource control policy recorded by the organization management module, wherein the second authentication result is allowing or denying the second resource access request for accessing the target cloud resource; and
the service module is further configured to obtain the second authentication result from the authentication module, and allow or deny, based on the second authentication result, the second resource access request for accessing the target cloud resource.

10. The cloud management platform according to claim 8 or 9, wherein the cloud management platform further comprises:
a registration module, configured to obtain a plurality of registration requests carrying different user accounts, and respectively register and record a plurality of user accounts based on the plurality of registration requests, wherein the plurality of user accounts comprise an account of the administrator, wherein
the organization management module is configured to classify the plurality of user accounts into the target organization, and set the account of the administrator as an administrator account of the target organization.

11. The cloud management platform according to claim 10, wherein the first resource access request carries a user account registered by the user outside the target organization on the cloud management platform, and
the service module is configured to: when determining that the user account carried in the first resource access request does not belong to the plurality of user accounts that correspond to the target organization and that are recorded by the registration module, determine that the first resource access request is triggered by the user outside the target organization.

12. The cloud management platform according to claim 10, wherein the first resource access request does not carry a user account registered on the cloud management platform, and
the service module is configured to: when determining that the first resource access request does not carry the user account registered on the cloud management platform, determine that the first resource access request is triggered by the user outside the target organization.

13. The cloud management platform according to any one of claims 8 to 12, wherein the first resource control policy comprises a cloud resource identifier field, an effect field, a request type field, and a condition field, wherein the cloud resource identifier field identifies the target cloud resource, the effect field identifies that access to the target cloud resource is denied or allowed, the request type field identifies a request type of the first resource access request, and the condition field indicates a user outside the target organization.

14. The cloud management platform according to any one of claims 8 to 13, wherein a type of the cloud resource comprises a virtual machine and a container for a computing service, a bucket for an object storage service, an EVS disk, and a cloud database.

15. A computing device cluster, wherein the computing device cluster comprises at least one computing device, and each computing device comprises a processor and a storage, wherein
the storage is configured to store instructions; and
the processor is configured to enable, based on the instructions, the computing device cluster to perform the method according to any one of claims 1 to 7.

16. A computer-readable storage medium, storing a computer program, wherein when the computer program is executed by a processor, the method according to any one of claims 1 to 7 is implemented.

17. A computer program product comprising instructions, wherein when the computer program product runs on a computing device, the computing device is enabled to perform the method according to any one of claims 1 to 7.
